# EUROPEAN PATENT APPLICATION

(11) **EP 2 405 703 A1**
(43) Date of publication of application: **11.01.2012**
(21) Application number: 10748295.2
(22) Date of filing: 08.03.2010
(51) Int. Cl.: H04W 74/00

(54) **METHOD, SYSTEM AND NETWORK DEVICE FOR NETWORK ACCESS OF RELAY NODE**

(30) Priority: 06.03.2009 CN 200910079337; 27.05.2009 CN 200910085023
(71) Applicant: China Mobile Communications Corporation, Beijing 100032 (CN)
(72) Inventor: YANG, Ning, Beijing 100032 (CN); LIU, Lei, Beijing 100032 (CN)
(74) Representative: de Beaumont, Michel
(86) International application number: PCT/CN2010/000282
(87) International publication number: WO 2010/099705

(57) **Abstract**

A method, a system and a network device for network access of a relay node are disclosed in the present application. The method includes: a network access message sent from a relay node to a network side carries a relay node identifier for distinguishing the relay node from a terminal node; the network side identifies said relay node according to said relay node identifier, so as to implement the network access of the relay node. By adding the relay node identifier for distinguishing the relay node from the terminal node in the network access message which is sent to the network side from the relay node, when the relay node accesses the network, the present application can effectively identify that the accessing node is a relay node, so that the problem of the distinction between the relay node and the terminal node by the network side is solved, thus it can be implemented that both the data are processed separately in the following process.

## Description

### Field of the Invention

The present invention relates to the field of communications and particularly to a method, system and network device for a network access of a relay node.

### Background of the Invention

The Long Term Evolution (LTE) project presented as evolved 3G offers transition between 3G and 4G The LTE architecture established in the 3^{rd} Generation Partnership Project (3GPP) is referred to as an Evolved UTRAN architecture (E-UTRAN), and an access network thereof is generally consisted of two parts, i.e., an Evolved Node B (eNB) and an access GateWay (aGW). The eNB performs functions of a general Node B and a majority of functions of a Radio Network Controller (RNC) including Radio Resource Control (RRC), scheduling, access control, bearer control, access mobility management, Inter-Cell Radio Resource Management (RRM) (ICR), etc. An interface between the eNB and the aGW is referred to as an S1 interface, and an interface between the eNB and another eNB is referred to as an X2 interface. The S1 interface generally assumes tasks of user data forwarding and mobility management, and the X2 interface generally assumes tasks of load balancing and switching and interference eliminating.

In the LTE network, relay schemes fall into four kinds of L0/L1/L2/L3 relays as per a user plan protocol stack for forwarding, wherein since only amplification and forwarding is involved in the user plane of L0 and L1 relays, the protocol stack of L0 and L1 relays relates to only the physical layer; since control functions of scheduling, hybrid automatic retransmission request, automatic retransmission request, etc., are required for an L2 relay, the protocol stack of the L2 relay relates to the physical layer, the Media Access Control (MAC) layer, the Radio Link Control (RLC) layer and the Packet Data Convergence Protocol (PDCP) layer, but the control function of RRC is generally performed by the donor eNB; and an L3 relay performs all the functions of the eNB and performs backhaul link transmission in the Internet Protocol (IP).

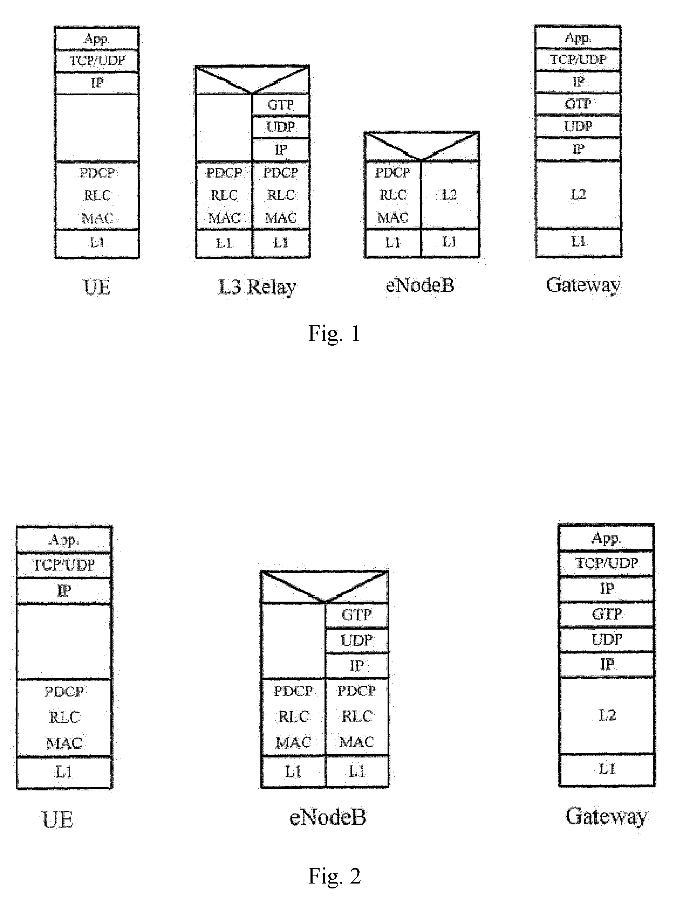

Fig. 1 is a schematic diagram of a user plan protocol stack of a relay in an LTE system or an LTE-Advanced system in the prior art. As illustrated in Fig. 1, a corresponding traffic flow or control information is generated at the application layer of a UE, packaged in IP and then transmitted via an air interface, and upon transmission through an L3 relay, the L3 relay firstly recovers user data to an IP packet at the application layer in the protocols of Physical (PHY), MAC, RLC, PDCP, etc., then performs corresponding packaging in IP according to the destination address of the IP packet, subsequently performs corresponding processes in the protocols of PDCP, RLC, MAC, PHY, etc., dependent upon the condition of an allocated backhaul link resource between the L3 relay and an eNB, and transmits data or signaling to the eNB via an air interface. The eNB performs a series of processes via the air interface and then transmits the data or signaling at the application layer to a corresponding entity directly according to the address of the IP packet which is packaged by the L3 relay, without packaging in IP.

Fig. 2 is a schematic diagram of a general user plan protocol stack in an LTE system in the prior art. As illustrated in Fig. 2, a corresponding traffic flow or control information is generated at the application layer of a User Equipment (UE), packaged in IP and then transmitted via an air interface; and an eNB firstly recovers user data to an IP packet at the application layer in the protocols of PHY, MAC, RLC, PDCP, etc., then performs corresponding packaging in IP according to the destination address of the IP packet and subsequently transmits data or signaling at the application layer to a corresponding entity.

As can be apparent from the foregoing processing flows, for the data or signaling from the L3 relay, the eNB directly forwards it according to the IP address; but for the data or signaling from the UE, the eNB packages it in IP and then forwards it. Apparently, the data or signaling transmitted from the UE is processed at the eNB differently from that transmitted from the L3 relay. Therefore, the eNB has to distinguish the received data or signaling from the UE from that from the L3 relay so as to perform the corresponding processes, that is, while accessing, the L3 relay node has to declare itself as an L3 relay node instead of a UE.

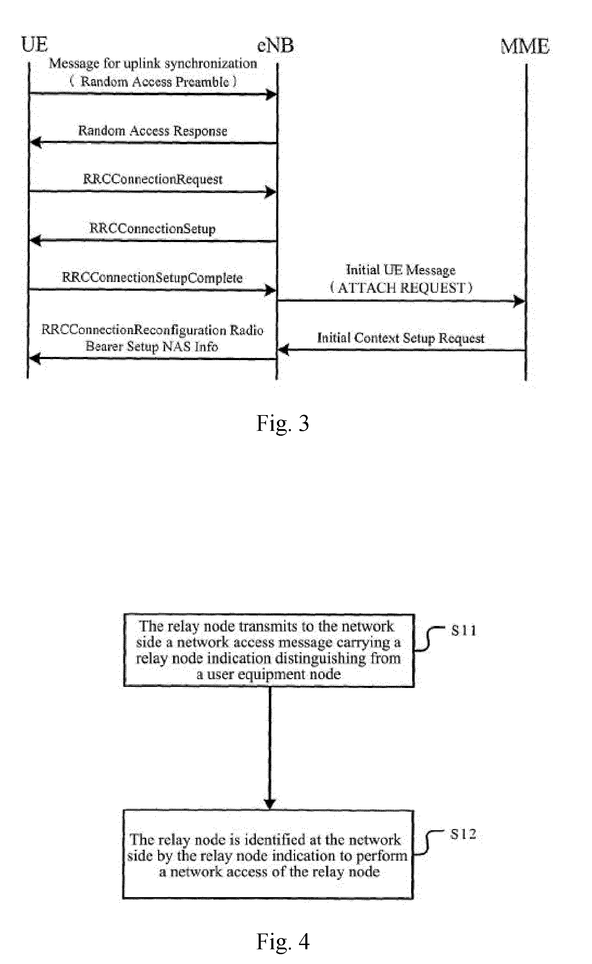

In the existing LTE system, only an access procedure for a general UE has been specified, but no access solution for an L3 relay node is available. In the LTE system, a random access solution for a general UE generally performs two functions of uplink synchronization and handling an access request of a user. Fig. 3 is a flow chart of attaching a general UE at the network side (i.e., a collision-based random access) in an LTE system in the prior art. As illustrated in Fig. 3, the random access flow is performed in four operations: (1) a preamble for uplink synchronization, i.e., Msg1, is transmitted on an uplink Physical Random Access Channel (PRACH); (2) a UE receives a feedback i.e., Msg2 from an eNB and an uplink synchronization process is completed, and if the preamble in the first operation collides, then the eNB feeds back corresponding retreat information in a response, and the UE retreats according to a preset retreat rule; and if there is no collision, then the eNB feeds back a random access response message including information on a temporary Cell Radio Network Temporary Identity (C-RNTI), a resource available to a connection setup request, etc., so that the UE may further transmit an access request message; (3) the UE transmits an uplink connection setup request (RRCConnectionRequest) message, i.e., Msg3 including the ID of the UE and a connection setup reason, over the resource allocated in the random access response message; (4) the eNB confirms completion of an access by the ID of the UE and changes the temporary C-RNTI of the UE to a formal C-RNTI, i.e., Msg4; and at this time a connection setup (RRCCConnectionSetup) message is fed back from the eNB side; (5) a connection setup completion (RRCConnectionComplete) message is transmitted from the user side to the eNB side, which may carry the user identifier of the UE, which is unique throughout the network; and (6) the eNB forwards this message to a Mobile Management Entity (MME) at the network side in an Initial UE message, so that the MME may identify the user equipment and aspects including a corresponding priority thereof, etc., by the user identifier of the UE, which is unique throughout the network.

A relay node is introduced in an LTE-Advanced network, and different processes are performed at the network side (e.g., a eNB) for the UE and the relay node, therefore, such an issue arises that the accessing relay node has to be identified at the network side, that is, how the network elements, e.g., the eNB, the MME, etc., get knowledge about whether the accessing node is a relay node so as to perform corresponding processes. However in the existing LTE system, only an access procedure for a general UE has been specified, but no solution of identifying a relay node at the network side is available.

The inventors have identified during making the invention that in the prior art, there is no relay node in a previous radio network, thus the issue of identifying a relay node at the network side has been not involved in the previous network, and if the access solution illustrated in Fig. 3 is adopted for an LTE-A network access, then no relay node can be identified at the network side, thus hindering effective process of relay data and failing to enforce a requisite scheduling policy.

### Summary of the Invention

An object of the invention is to address the technical problem in the existing LTE system or LTE-Advanced system of failing to identify a relay node at the network side for a network access by providing a method, system and network device for a network access of a relay node to thereby identify the relay node at the network side and to ensure effective processing of data of the relay node.

In order to attain the foregoing object, a method for a network access of a relay node is provided according an aspect of the invention, which is applicable to an LTE network or an LTE-Advanced network and which includes: transmitting by the relay node to the network side a network access message carrying a relay node indication distinguishing the relay node from a user equipment node; and

identifying at the network side the relay node by the relay node indication to perform the network access of the relay node.

In the present technical solution, transmitting by the relay node the network access message to the network side includes: transmitting by the relay node to an eNB an uplink connection setup request message including the relay node indication distinguishing the relay node from the user equipment node; and identifying at the network side the relay node by the relay node indication includes: identifying by the eNB the relay node by the relay node indication and performing by the eNB the network access of the relay node which is distinguished from a network access of the user equipment node.

In the present technical solution, the uplink connection setup request message including the indication distinguishing the relay node from the user equipment node includes: an additional field distinguishing the relay node from the user equipment node included in the uplink connection setup request message; or the indication distinguishing the relay node from the user equipment node included in the field of "Connection Establishment Cause" in the uplink connection setup request message.

In the present technical solution, the indication distinguishing the relay node from the user equipment included in the field of Connection Establishment Cause is Relay Original.

In the present technical solution, before the transmitting by the relay node of the uplink connection setup request message to the eNB, the solution further includes: performing, by the relay node, uplink synchronization with the eNB; and if the uplink synchronization succeeds, then transmitting by the eNB a random access response message including a temporary C-RNTI to the relay node; otherwise, retreating by the relay node according to a preset retreat rule.

In the present technical solution, the operation of performing by the eNB the network access of the relay node according to the indication includes: converting by the eNB the temporary C-RNTI into a formal C-RNTI, feeding to the relay node for confirming the temporary C-RNTI of the relay node, and putting the formal C-RNTI of the relay node in a group of relay nodes or using the formal C-RNTI as an indication of the status of the relay node.

In the present technical solution, the relay node is a L3 relay node.

In the present technical solution, the indication distinguishing the relay node from the user equipment node may distinguish one type of the relay node from another.

In the present technical solution, transmitting by the relay node the network access message to the network side includes: transmitting by the relay node to an eNB a non-access sub-layer message carrying the relay node indication distinguishing the relay node from the user equipment node; and

identifying at the network side the relay node by the relay node indication includes:

checking by a mobility management entity at the network side from the relay node indication whether an initiating node of the non-access sub-layer message is a relay node;

indicating by the mobility management entity to the eNB forwarding the non-access sub-layer message about the result of the checking; and

performing, by the eNB, corresponding scheduling according to the result of the checking.

In the present technical solution, the relay node indication includes:

information on an IMSI or a GUTI of a user equipment which indicates a relay; or information on a global cell ID of an eNB which indicates a relay; or information on a special relay ID.

In the present technical solution, the operation of indicating by the mobility management entity to the eNB forwarding the non-access sub-layer message about the result of the checking includes:

indicating by the mobility management entity to the eNB forwarding the non-access sub-layer message about the result of the checking via an initial user equipment context setup request message; or

indicating by the mobility management entity to the eNB forwarding the non-access sub-layer message about the result of the checking via an initial context setup request message for the relay node.

In the present technical solution, the initial user equipment context setup request message or the initial context setup request message for the relay node includes:

relay indication information distinguishing the relay node from a general user equipment; and

indication information indicating the type of the relay node.

In the present technical solution, the relay indication information is the relay node indication when the result of the checking presents that the initiating node is a relay node.

In order to attain the foregoing object, a method for a network access of an initiating node is provided according to another aspect of the invention, which is applicable to an LTE network or an LTE-Advanced network and includes: transmitting by the initiating node to the network side a network access message carrying an indication indicating that the initiating node is a relay node or a user equipment node; and identifying at the network side the initiating node by the indication to perform a network access of the initiating node.

In order to attain the foregoing object, a system for a network access of a relay node is provided according to another aspect of the invention, which is applicable to an LTE network or an LTE-Advanced network and which includes a relay node and a network device, wherein:

the relay node is configured to transmit to the network side a network access message carrying a relay node indication distinguishing the relay node from a user equipment node; and

the network device is configured to identify the relay node by the relay node indication to perform a network access of the relay node.

In the system, the network device is a eNB;

the relay node is configured to transmit to the eNB an uplink connection setup request message including the relay node indication distinguishing the relay node from the user equipment node; and

the eNB is configured to identify the relay node by the relay node indication to perform a network access of the relay node.

In the system, the network device includes an eNB and a mobility management entity;

the relay node is configured to transmit to the eNB a non-access sub-layer message carrying the relay node indication distinguishing the relay node from the user equipment node;

the eNB is configured to forward the non-access sub-layer message to the mobility management entity and to perform a network access of the relay node according to the result of determining by the mobility management entity; and

the mobility management entity at the network side is configured to check from the relay node indication in the non-access sub-layer message forwarded from the eNB whether the initiating node of the non-access sub-layer message is a relay node and to indicate to the eNB about the result of the checking.

In order to attain the foregoing object, a relay node is provided according to another aspect of the invention, which is applicable to an LTE network or an LTE-Advanced network and which includes: a configuring module configured to configure an indication distinguishing the relay node from a user equipment node in an uplink connection setup request message; and a transmission module configured to transmit the uplink connection setup request message.

In the present technical solution, the indication distinguishing the relay node from the user equipment node configured by the configuring module includes: an additional filed distinguishing the relay node from the user equipment node; or an indication distinguishing the relay node from the user equipment node in the field of "Connection Establishment Cause".

In order to attain the foregoing object, an eNB for a network access of a relay node is provided according to another aspect of the invention, which is applicable to an LTE network or an LTE-Advanced network and which includes: a reception module configured to receive an uplink connection setup request message transmitted from the relay node; a processing module configured to convert a temporary C-RNTI into a formal C-RNTI, feed to the relay node for confirming the temporary C-RNTI of the relay node and put the formal C-RNTI of the relay node in a group of relay nodes or use the formal C-RNTI as an indication of the status of the relay node, according to an indication distinguishing the relay node from a user equipment node in the uplink connection setup request message; and an access module configured to perform a network access of the relay node.

In order to attain the foregoing object, a relay node is provided according to another aspect of the invention, which includes:

a random access module configured to set up a random access process with the network side; and

an indication module configured to add a specific relay node indication after the random access module sets up a connection with the network side.

In the relay node, the specific relay node indication includes:

information on an IMSI or a GUTI of a user equipment which indicates the relay; or information on a global cell ID of an eNB which indicates the relay; or information on a special relay ID.

In order to attain the foregoing object, an eNB for a network access of a relay node is provided according to another aspect of the invention, which includes:

an interface module configured to forward a non-access sub-layer message of the user side to a mobility management entity at the network side and to receive a corresponding feedback message;

an identifying module configured to identify from the feedback message of the mobility management entity whether the initiating node of the non-access sub-layer message is a relay node; and

a processing module configured to perform a corresponding scheduling policy according to the result of the identifying module.

In the eNB, the feedback message is an initial user equipment context setup request message or an initial context setup request message of the mobility management entity for the relay node; and

the feedback message includes relay indication information distinguishing the relay node from a general user equipment and indication information indicating the type of the relay node.

In order to attain the foregoing object, a mobility management entity is provided according to another aspect of the invention, which includes:

an interface module configured to receive an initial user equipment message transmitted from an eNB;

a checking module configured to check from a non-access sub-layer message in the initial user equipment message whether an initiating node of the non-access sub-layer message is a relay node as well as the type of the relay node; and

a processing module configured to indicate to the eNB about the result of the checking by the checking module via the interface module.

In the mobility management entity, the processing module includes:

a relay indication adding sub-module configured to add relay node indication information and indication information on the type of the relay node to an initial user equipment context setup request message or an initial context setup request message for the relay node when the result of the checking presents that the initiating node is a relay node; and

an indicating sub-module configured to transmit to the eNB the initial user equipment context setup request message or the initial context setup request message for the relay node processed by the relay indication adding sub-module.

The method, system and network device for a network access of a relay node according to the respective embodiments of the invention can add the relay node indication in the network access message, including the uplink connection setup request message and/or the non-access sub-layer message, transmitted from the relay node to address the issue of identifying the access relay node at the eNB, thus scheduling can be performed subsequently at the network side for the relay node in a scheduling policy different from that of a general user equipment. Further, the respective embodiments of the invention can also perform functions of verifying the relay node, etc., while ensuring an access of the relay node.

Other features and advantages of the invention will be set forth in the following description and will become apparent partly from the specification or be appreciated from practicing the invention. The objects and other advantages of the invention can be attained and achieved in structures particularly pointed out in the description, claims and drawings.

The technical solutions of the invention will be further described in details hereinafter with reference to the drawings and the embodiments.

### Brief Description of the Drawings

The drawings are intended to provide further understanding of the invention, constitute a part of the specification and serve together with the embodiments of the invention to illustrate but not limit the invention. In the drawings:

Fig. 1 is a schematic diagram of a user plan protocol stack of a relay in an LTE system in the prior art;

Fig. 2 is a schematic diagram of a user plan protocol stack of a general user equipment in an LTE system in the prior art;

Fig. 3 is a schematic diagram of an existing flow of attaching a user equipment at the network side in the prior art;

Fig. 4 is a flow chart of a method for a network access of a relay node according to an embodiment of the invention;

Fig. 5 is a flow chart of a method for a network access of a relay node according to a first embodiment of the invention;

Fig. 6 is a flow chart of a method for a network access of a relay node according to a second embodiment of the invention;

Fig. 7 is a flow chart of a method for a network access of a relay node according to a third embodiment of the invention;

Fig. 8 is a flow chart of a method for a network access of a relay node according to a fourth embodiment of the invention;

Fig. 9 is a flow chart of signaling in a method for a network access of a relay node according to a fifth embodiment of the invention;

Fig. 10 is a schematic diagram of a structure of a system for a network access of a relay node according to a sixth embodiment of the invention;

Fig. 11 is a schematic diagram of a structure of an eNB in a system for a network access of a relay node according to a seventh embodiment of the invention;

Fig. 12 is a schematic diagram of a structure of an eNB according to an eighth embodiment of the invention;

Fig. 13 is a schematic diagram of a structure of a relay node according to the eighth embodiment of the invention;

Fig. 14 is a schematic diagram of a structure of a mobility management entity according to the eighth embodiment of the invention; and

Fig. 15 is a schematic diagram of an application of an eNB, a relay node and a mobility management entity to identifying the relay node according to a ninth embodiment of the invention.

The following reference numerals are indicated in the drawings.
402 -- reception module; 404 -- processing module; and 406 -- access module.

### Detailed Description of the Embodiments

Embodiments of the invention will be described hereinafter with reference to the drawings, and it shall be appreciated that the embodiments described herein are merely intended to illustrate and explain but not limit the invention.

A flow of a method for a network access of a relay node according to an embodiment of the invention as illustrated in Fig. 4 includes the following operations S11 and S22.

Operation S11: The relay node transmits to the network side a network access message carrying a relay node indication distinguishing the relay node from a user equipment node. The network access message includes an uplink connection setup request message and/or a non-access layer sub-message.

Particularly, the network access message transmitted to the network side is an uplink connection setup request message which is transmitted from the relay node requesting for an access and which carries a relay node indication so that a network device at the network side, e.g., a eNB, etc., can identify directly that the requesting node is a relay node instead of a general user equipment when the relay node requests for an access. Alternatively, the network access message transmitted to the network side is a non-access layer sub-message after a connection to the relay node is set up, e.g., a connection setup completion message carrying a relay node indication, so that a network device at the network side, e.g., a eNB and a mobility management entity can identify that the requesting node is a relay node instead of a general user equipment when the relay node requests for a network access.

Of course, alternatively a relay node indication can be carried in both an uplink connection setup request message upon requesting for an access for preliminary identifying and a non-access layer sub-message for further confirmation to ensure proper identifying.

Operation S12: The relay node is identified at the network side by the relay node indication to perform a network access of the relay node.

For the case that the relay node indication is carried in the uplink connection setup request message, a device at the network side, an eNB, identifies the relay node directly by the relay node indication. For the case that the relay node indication is carried in the non-access layer sub-message, the eNB forwards the non-access layer sub-message to a mobility management entity, the mobility management entity performs checking by the relay node indication and notifies the eNB about the result of the checking, and the eNB performs subsequent scheduling for the relay node.

When a request node is identified as a relay node, the requested network access of the relay node is performed at the network side.

A specific process for performing a network access of a relay node transmitting to the network side a network access request including an uplink connection setup request message and/or a non-access layer sub-message in which a relay node indication is carried will be described hereinafter in connection with the embodiments.

### The First Embodiment

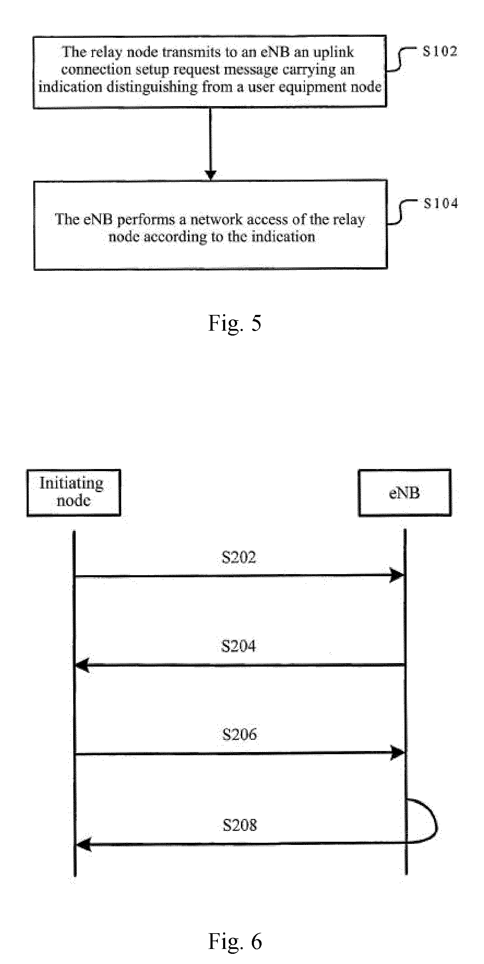

Fig. 5 is a flow chart of a method for a network access of a relay node according to the first embodiment of the invention. As illustrated in Fig. 5, the present embodiment includes the following operations S102 and S104.

Operation S102: The relay node transmits to an eNB an uplink connection setup request message carrying an indication distinguishing the relay node from a user equipment node; and

Operation S104: The eNB performs a network access of the relay node distinguishing the relay node from a network access of a user equipment node according to the indication.

Alternatively in the process of the present embodiment, the initiating node transmits to the eNB an uplink connection setup request message including an indication indicating whether the initiating node is a relay node or a user equipment node; and the eNB performs a network access of the initiating node according to the indication, that is, sets up a network connection by a rule of a relay node when the initiating node is a relay node or by a rule of a user equipment node when the initiating node is a user equipment node.

The method according to the present embodiment can be applicable to an LTE network or an LTE-Advanced network. In the present embodiment, the uplink connection setup request message includes an indication indicating that the initiating node of an uplink connection setup request is a relay node instead of a user equipment node. In the LTE network or the LTE-Advanced network, the uplink connection setup request message may be a message Msg3, the relay node may be an IP forwarding based relay node (simply an L3 relay node), and the user equipment node may be a general UE. The present embodiment is described taking an L3 relay node as an example, but the method according to the present embodiment can also be applicable to another relay approach, e.g., an L0 relay node, an L1 relay node, an L2 relay node, etc., all of which shall come into the scope of the invention.

In the present embodiment, the uplink connection setup request message may include an additional field distinguishing the relay node from a user equipment node, for example, a bit in the uplink connection setup request message may indicate that the "RRCConnectionRequest" comes from a general UE when it is "0" or from an L3 relay node when it is "1". Furthermore, an indication of an L3 relay node or a general UE may alternatively be included in the existing field of "connection establishment cause", i.e., "Establishment Cause" in the uplink connection setup request message, for example, "Relay Original", i.e., "RN connection establishment", is added to "Establishment Cause" for identifying.

Alternatively in the present embodiment, several bits in "RRCConnectionRequest" may be used or corresponding indications may be added in the "Establishment Cause" field to distinguish one relay approach from another. For example, several bits may be used to represent an L0 relay node with "00", an L1 relay node with "01", an L2 relay node with "10" and an L3 relay node with "11". An alternative technical solution is also possible in which only a relay node but no user equipment node is indicated as long as the eNB can identify that the node initiating "RRCConnectionRequest" is a relay node. In one word, any variation without departing from the scope of the present embodiments shall come into the scope of the invention.

In the present embodiment, the operation of "performing a network access of the relay node distinguishing the relay node from a network access of a user equipment node" particularly includes performing a process on data transmitted from the relay node different from that on data transmitted from a user equipment node, for example, forwarding the data of the relay directly by an IP address without packaging in IP. The operation may further include putting by the eNB a C-RNTI of the relay node in a group of relay nodes, i.e., an RN group, and/or use the C-RNTI as an indication of the status of the relay node.

Furthermore, the operation of "performing by the eNB a network access of the relay node" may include converting a temporary C-RNTI into a formal C-RNTI and feeding back and confirming the C-RNTI of the relay node to the L3 relay node. Particularly, the temporary C-RNTI is one selected by the eNB randomly among C-RNTIs available to a network system. Due to presence of a case that the network access fails, the pre-allocated C-RNTI is a temporary one, and when the network access succeeds, the temporary C-RNTI is converted into a formal C-RNTI, or when the network access fails, the temporary C-RNTI is invalidated and may be available to a subsequent request for a network access of a node.

The present embodiment addresses the issue of identifying a relay node at an eNB by adding the indication of the relay node to an uplink connection setup request message to thereby perform separate processes on data of a relay and that of a general user equipment in a subsequent flow.

### The Second Embodiment

In the present embodiment, an eNB is an eNB in an LTE system or an LTE-Advanced system, and Fig. 6 is a flow chart of a method for a network access of a relay node according to the second embodiment of the invention. As illustrated in Fig. 6, the present embodiment includes the following operations S202, S204, S206 and S208.

Operation S202: An initiating node transmits randomly a preamble for uplink synchronization to the eNB on an uplink physical random access channel;

Operation S204: If the preamble collides, then the initiating node retreats according to a preset retreat rule; otherwise, the eNB transmits a random access response message including a temporary C-RNTI to the initiating node, where the retreat rule refers to that the current node temporarily retreats according to a specific rule when its uplink synchronization collides with that of another node and thereafter requests for uplink synchronization again.

Operation S206: The eNB receives an uplink connection setup request message (RRCConnectionRequest) from the initiating node and determines from the uplink connection setup request message that whether the initiating node is a general UE or an L3 relay node.

Operation S208: When the initiating node is an L3 relay node, the eNB converts a temporary C-RNTI into a C-RNTI, feeds back and confirms the C-RNTI of the relay node to the L3 relay node and puts the C-RNTI of the L3 relay node into a group of relay nodes, i.e., an RN group, or uses the C-RNTI as an indication of the status of the L3 relay node to perform a network access of the relay node; and when the initiating node is a general UE, the eNB converts a temporary C-RNTI of the general UE into a C-RNTI to perform a network access of the general UE.

The method according to the present embodiment may be applicable to an LTE network or an LTE-Advanced network. In the present embodiment, the initiating node is a general UE or an L3 relay node. A field is added to the uplink connection setup request message to indicate that the initiating node is a general UE or an L3 relay node, thus the type of the initiating node can be determined. A corresponding process can be performed for a different type of the initiating node in a subsequent network access process.

In the present embodiment, the uplink connection setup request message may include an additional field distinguishing an L3 relay node from a general UE to thereby ensure that the eNB can determine from the uplink connection setup request message whether the initiating node is a general UE or an L3 relay node. For example, a bit in the uplink connection setup request message may indicate that the "RRCConnectionRequest" comes from a general UE when it is "0" or from an L3 relay node when it is "1". Furthermore, an indication of an L3 relay node or a general UE may alternatively be included in the existing field of "connection establishment cause", i.e., "Establishment Cause" in the uplink connection setup request message, for example, "Relay Original", i.e., "RN connection establishment", is added to "Establishment Cause" for identifying.

At present, the uplink connection setup request message includes the indication of a UE (UE-Identity), a connection establishment cause (Establishment Cause) and a reserved spare bit, where the connection establishment cause includes an emergent call (Emergency), a high-priority access (High Priority Access), an incoming call to a callee (mt-Access), signaling from a caller (mo-Signaling), data of the caller (mo-Data), etc. In the present embodiment, the reserved spare bit may be used for identifying, or an additional connection establishment cause, i.e., "Relay Original", may be used for identifying, thereby identifying the relay node.

Furthermore, the concept of an L3 relay has not be introduced until in the 3GPP R10, and the method according to the present embodiment may also be performed in a 3GPP R10 network even for a UE which is a 3GPP R8 device.

The present embodiment addresses the issue of identifying a general UE and an L3 relay node at an eNB for a network access by adding the indication of the relay node to an uplink connection setup request message to thereby ensure that the eNB performs a valid process on data of the L3 relay, thus conserving resources of a system and a network, while ensuring compatibility of a network system, to which the L3 relay node is introduced, with an R8 UE.

In the foregoing first and second embodiments, a relay node indication is carried in an uplink connection setup request message to indicate a relay node and to perform a specific flow of a network access.

### The Third Embodiment

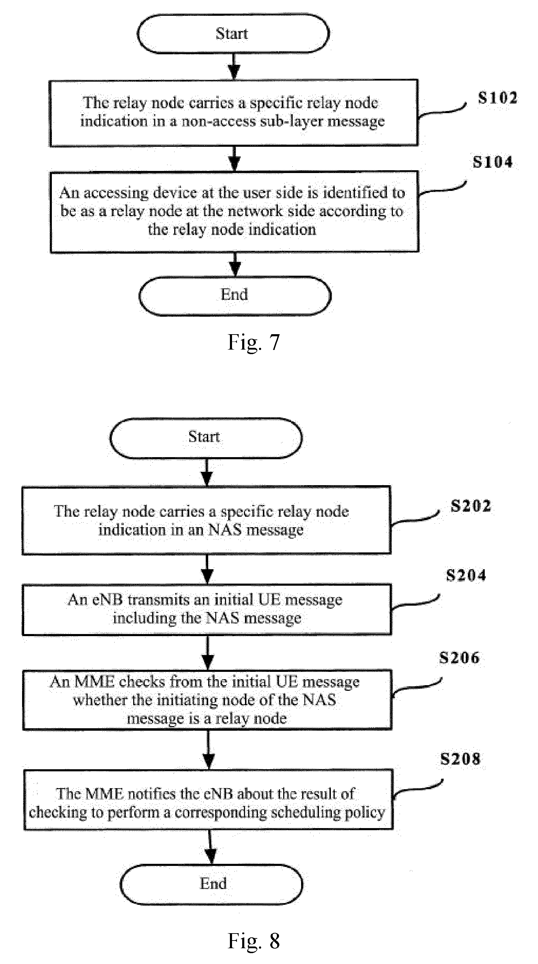

A flow of a method for a network access of a relay node according to the third embodiment of the invention is as illustrated in Fig. 7, and the present embodiment includes the following operations S102 and S104.

Operation S102: The relay node carries a specific relay node indication in a non-access sub-layer message; and

Operation S104: An accessing device at the user side is identified at the network side by the relay node indication to determine whether it is a relay node and to perform a network access of the relay node.

In the present embodiment, the relay node carries a specific relay node indication in a Non-Access Sub-Layer (NAS) message accessing the network side and thus can be identified subsequently at the network side to thereby determine the initiating node of the NAS message is a relay node. The present embodiment can perform functions of validity authentication, verification, etc., of the relay node while ensuring an access of and identifying the relay node.

The relay node in the present embodiment is different from a traditional put-through relay node (simply a put-through station) generally in such a forwarding process that the put-through station simply amplifies and forwards a signal; and the relay node in the present embodiment may be a relay node of Type 1 provided with a separate physical cell ID and arranged as a separate physical cell or a relay node of Type 2 sharing a physical cell ID of a master eNB and transparent to a UE in the cell.

### The Fourth Embodiment

Fig. 8 is a flow chart of a method for a network access of a relay node according to the fourth embodiment of the invention. As illustrated in Fig. 8, the present embodiment includesthe following operations S202, S204, S206 and S208.

Operation S202: The relay node carries a specific relay node indication in an NAS message;

Particularly, the relay node indication may be information on an International Mobile Subscriber Identity (IMSI) or a Globally Unique Temporary Identity (GUTI) of a user equipment which indicates the relay node, information on a global cell ID of an eNB which indicates the relay node, information on a special relay ID, etc., and this operation will be detailed below in the fifth embodiment of the invention.

Operation S204: An eNB transmits an initial UE message including the NAS message;

Operation S206: A Mobility Management Entity (MME) acquires the relay node indication from the NAS message in the initial UE message and thereby checks whether the initiating node of the NAS message is a relay node as well as determines the type of the relay node; and

Operation S208: The MME notifies the eNB in the operation S204 about the result of the checking, so that the eNB may select a corresponding scheduling policy.

The method for identifying a relay node in the present embodiment can indicate the relay node in three approaches, and the relay node can be announced at the network side so that the eNB can adopt a different scheduling policy and also perform a function of verifying the relay node.

### The Fifth Embodiment

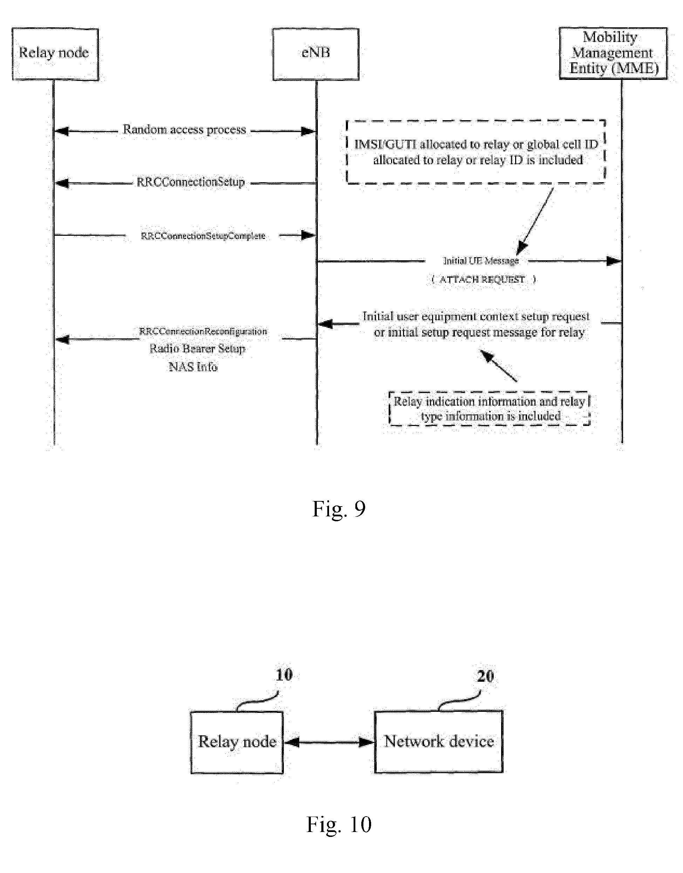

Fig. 9 is a flow chart of signaling in a method for a network access of a relay node according to the fifth embodiment of the invention. A specific flow is as illustrated in Fig. 9.

Operation 1: The relay node performs an uplink random access process (RACH) with an eNB;

Operation 2: The relay node transmits a connection setup request (RRC Connection Request) to the eNB, and then the eNB feeds back a connection setup message (RRC Connection Setup);

Operation 3 : The relay node returns to the eNB side a connection setup completion message (RRC Connection Complete) in which an NAS message ("ATTACH REQUEST") carries a specific relay node indication if the user side is a relay node;

Operation 4: The eNB forwards the NAS message to a Mobility Management Entity (MME) at the network side in an Initial UE message including the NAS message including the relay node indication;

Operation 5: The MME receives the initial UE message and checks from the relay node indication in the NAS message forwarded in the initial UE message whether the accessing user side is a general UE or a relay node as well as the type of the relay node and can further verify the relay node for validity and identifies and determines the user side (a general UE or a relay node) and aspects of a corresponding priority, etc;

Operation 6: The MME reuses an initial context setup request or creates a context setup request message for a relay to indicate to the eNB about the relay identity; and

Operation 7: The eNB identifies from the message transmitted from the MME that the accessing node is a relay node and further performs scheduling for and transmits reconfiguration information to the relay node to thereby perform an access of the relay node to the network side.

In the operation 3 of the present embodiment, the following three approaches may be adopted for the specific relay node indication in the "ATTACH REQUEST" message of the relay node:

A. Information on IMSIs or GUTIs of UEs is reused. A relay may be indicated from the information on the an IMSI or a GUTI of a UE, and at this time a part of the information on the IMSIs or the GUTIs shall be allotted for a relay node to thereby indicate the relay node identity;

B. Information on global cell IDs of eNBs is reused. A relay may be indicated from the information on a global cell ID of an eNB, and at this time a part of the global cell IDs shall be allotted, the information on the global cell ID of the eNB shall be added to the NAS message, and the use of the global cell ID for a relay shall be made known to the network side in advance.

C. Information on special relay IDs is used. A relay may be indicated from the information on a specific relay ID, and at this time the information on the relay ID shall be added to the NAS message, and the use of the ID as a relay ID shall be made known to the network side in advance.

In the operation 6 of the present embodiment, the MME may indicate to the eNB about the relay identity in two methods as follows.

In the first method, relay indication information distinguishing a relay node from a general user equipment and indication information indicating the type of the relay node is added into the initial context setup request message. For example, a bit may be set in the initial context setup request message to represent the relay indication information. The bit is set to 1 and used as a relay indication when the result of checking in the operation 5 presents that the accessing user side is a relay node; otherwise, it is set to 0 and used as a general UE indication. The bit may be set to 0 by default and to 1 only for a relay. Alternatively, when the result of checking by the MME presents that the accessing user side is a relay node, a relay node indication is added directly to the initial context setup request message, and indication information on the type of the relay node is added thereto (the indication information on the type of the relay node may be represented in an additional bit or a reserved bit), e.g., Type 1, Type 2, etc.

In the second method, an initial context setup request message for a relay node is created including relay indication information distinguishing a relay node from a general user equipment and indication information indicating the type of the relay node. A relay node and the type thereof can be indicated in the indication information so that the eNB can identify the accessing node as a relay.

The issue of identifying a relay node to be addressed by the invention may be addressed by adding an indication distinguishing a relay node from a user equipment node in an initial random access process, and as opposed to identifying the relay node in the method for a network access of a relay node according to the first and second embodiments, it is proposed in the third, fourth and fifth embodiments to indicate identity information of the relay node in the specific relay node indication in the NAS message and thereafter indicate to the eNB node about the identity information of the relay in "Initial Context Setup Request" or the initial context setup request message for the relay node so that the eNB can distinguish unambiguously data from the general UE from data from the relay during subsequent scheduling for the relay to thereby ensure proper processing of the data of the general UE and the relay node and perform a necessary scheduling policy. The foregoing respective third, fourth and fifth embodiments can make better reuse of the existing flow and the MME can perform access authentication and verification of the relay with high security.

### The Sixth Embodiment

The sixth embodiment provides an access system for a relay node based upon the access method for a relay node according to the embodiments of the invention, and the system may be applicable to an LTE network or an LTE-Advanced network. As illustrated in Fig. 10, the system includes a relay node 10 and a network device 20.

The relay node 10 is configured to transmit to the network side a network access message carrying a relay node indication distinguishing the relay node from a user equipment node.

The network device 20 is configured to identify the relay node by the relay node indication to perform a network access of the relay node.

Based on the method for a network access of a relay node according to the first and second embodiments of the invention, the network device in the system is an eNB.

The relay node is particularly configured to transmit to the eNB an uplink connection setup request message including the indication distinguishing the relay node from the user equipment node.

The eNB is configured to identify the relay node by the relay node indication to perform a network access of the relay node.

The relay node and the eNB will be detailed in the seventh embodiment below.

Based on the method for a network access of a relay node according to the third, fourth and fifth embodiments of the invention, the network device in the system is an eNB and a mobility management entity.

The relay node is particularly configured to transmit to the eNB a non-access sub-layer message carrying the specific relay node indication of the user equipment node.

The eNB is configured to forward the non-access sub-layer message to the mobility management entity and to perform a network access of the relay node in response to the result of checking by the mobility management entity.

The mobility management entity at the network side is configured to check from the relay node indication in the non-access sub-layer message forwarded from the eNB whether the initiating node of the non-access sub-layer message is a relay node and to indicate to the eNB forwarding the non-access sub-layer message about the result of checking.

The relay node, the eNB and the mobility management entity will be detailed in the eighth embodiment below.

### The Seventh Embodiment

Based upon the method for a network access of a relay node according to the first and second embodiments, the present seventh embodiment provides a relay node including: a configuring module configured to configure an indication distinguishing the relay node from a user equipment node in an uplink connection setup request message; and a transmission module configured to transmit the uplink connection setup request message.

In the present embodiment, the indication distinguishing the relay node from the user equipment node is particularly an additional filed distinguishing the relay node from the user equipment node or an indication distinguishing the relay node from the user equipment node in the field of "Connection Establishment Cause".

The relay node according to the present embodiment may be applicable to an LTE network or an LTE-Advanced network. For details of the implementation of the present embodiment, reference can be made to the relevant description of the first embodiment, and the former has all of the advantageous effects of the first embodiment, thus a repeated description thereof will be omitted here.

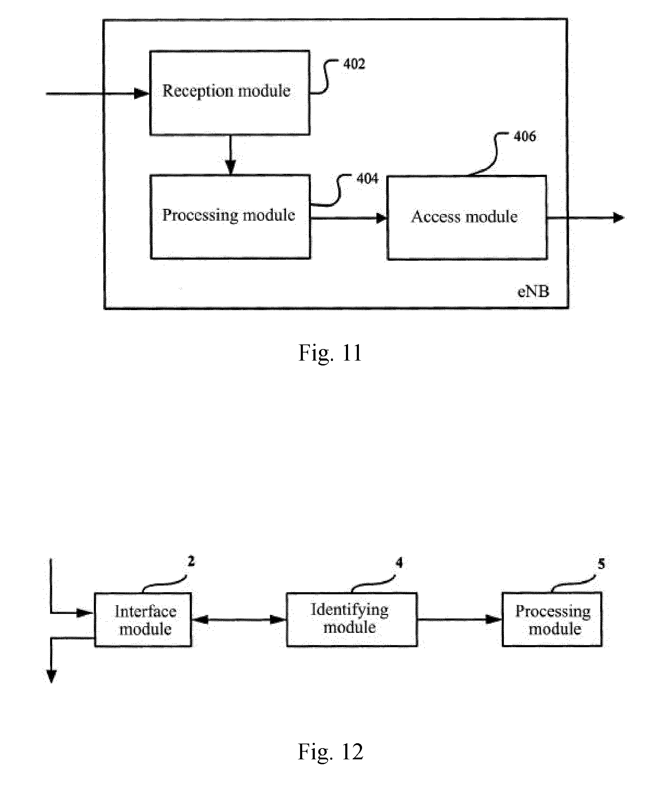

In Fig. 11, the seventh embodiment of the invention further provides an eNB in a system for a network access of a relay node based upon the method for a network access of a relay node according to the first and second embodiments, and as illustrated in Fig. 11, the eNB includes: a reception module 402 configured to receive an uplink connection setup request message transmitted from the relay node; a processing module 404 configured to put a C-RNTI of the relay node in a group of relay nodes or use the C-RNTI as an indication of the status of the relay node according to an indication distinguishing the relay node from a user equipment node in the uplink connection setup request message; and an access module 406 configured to perform a network access of the relay node.

Furthermore, the processing module 402 may be further configured to convert a temporary C-RNTI into the C-RNTI and to feed to the relay node for confirming the C-RNTI of the relay node.

The eNB according to the present embodiment may be applicable to an LTE network or an LTE-Advanced network. For details of the implementation of the present embodiment, reference can be made to the relevant description of the first embodiment, and the former has all of the advantageous effects of the first embodiment, thus a repeated description thereof will be omitted here.

### The Eighth Embodiment

Based upon the third, fourth and fifth embodiments, the eighth embodiment of the invention provides an eNB, a relay node and a mobility management entity.

Fig. 12 is a schematic diagram of a structure of the eNB in the present embodiment. As illustrated in Fig. 12, the eNB includes:

an interface module 2 configured to forward a non-access sub-layer message of the user side to a mobility management entity at the network side and to receive a corresponding feedback message (e.g., an initial user equipment context setup request message or an initial context setup request message for a relay node);

an identifying module 4 configured to identify from the feedback message of the mobility management entity whether the initiating node of the non-access sub-layer message is a relay node, where the feedback message may include relay indication information distinguishing the relay node from a general user equipment and indication information indicating the type of the relay node, therefore, the identifying module 4 can identify the relay node and the type thereof, and for details thereof, reference can be made to the relevant description of the embodiment in Fig. 9; and

a processing module 5 configured to perform a corresponding scheduling policy in response to the result of the identifying module.

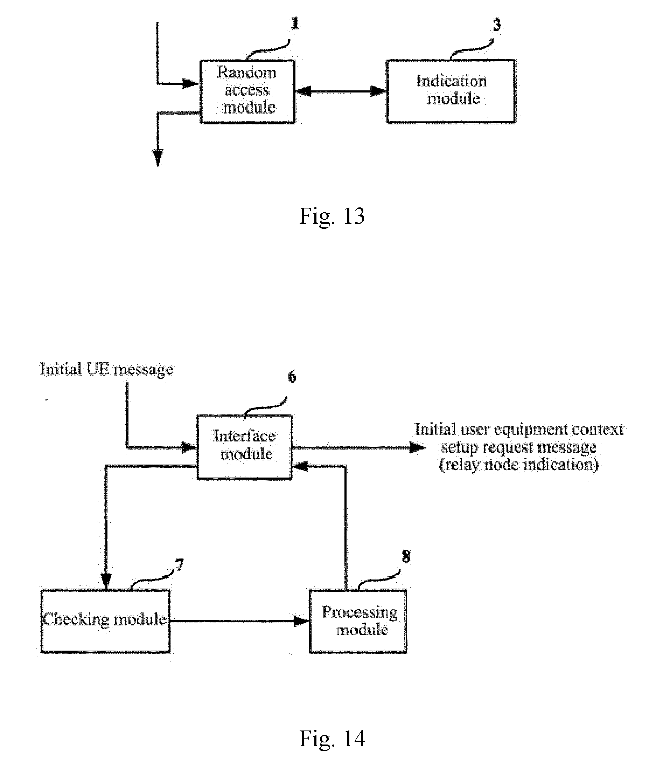

Fig. 13 is a schematic diagram of a structure of the relay node in the present embodiment. As illustrated in Fig. 13, the relay node includes: a random access module 1 configured to set up a random access process with the network side; and an indication module 3 configured to add a specific relay node indication after the random access module sets up a connection with the network side, for details of which, reference can particularly be made to the three approaches of adding the relay node indication in the operation 3 of Fig. 9: information on an IMSI or a GUTI of a user equipment, or information on a global cell ID of an eNB, or information on a special relay ID, and a repeated description thereof will be omitted here.

Fig. 14 is a schematic diagram of a structure of a mobility management entity in the present embodiment. As illustrated in Fig. 14, the mobility management entity includes:

an interface module 6 configured to receive an initial user equipment message transmitted from an eNB;

a checking module 7 configured to check from a non-access sub-layer message in the initial user equipment message whether an initiating node of the non-access sub-layer message is a relay node as well as the type thereof, where for details thereof, reference can be made to the operation 5 in Fig. 9; and

a processing module 8 configured to indicate to the eNB about the result of the checking by the checking module via the interface module, and for details thereof, reference can be made to the two indicating methods of the operation 6 in Fig. 9.

The respective devices according to the eighth embodiment are improvements to devices at the network side or the user side, which come into the scope of the invention, to thereby address the issue of identifying a relay node at the network side and to perform functions of verifying the relay node for validity while ensuring an access of the relay node.

The respective embodiments of the inventive method in Figs.7 to 9 may be embodied in the devices as structured in Figs. 12 to 14.

### The Ninth Embodiment

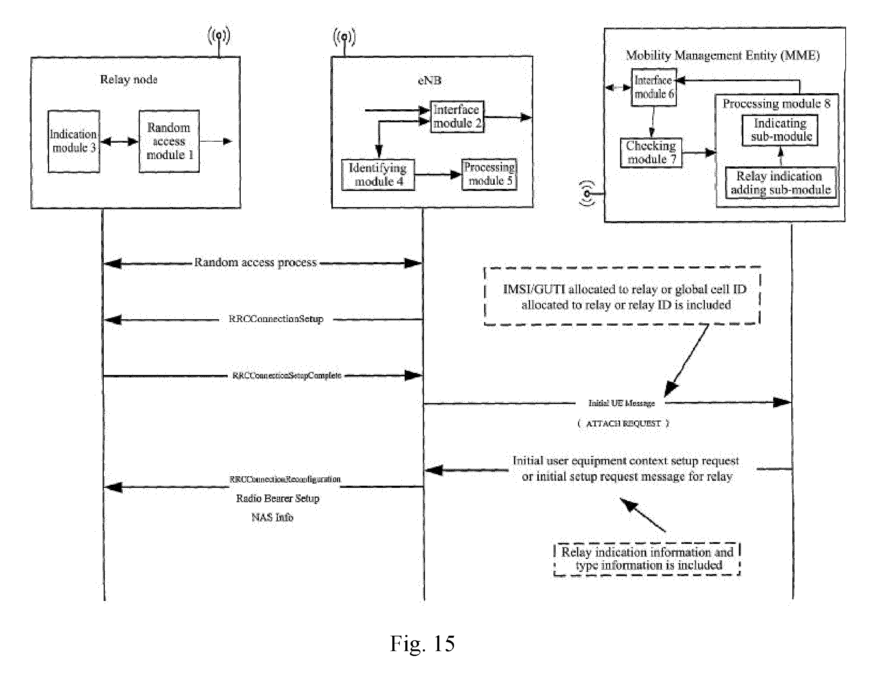

Fig. 15 is a schematic diagram of an application of the eNB, the relay node and the mobility management entity according to the eighth embodiment of the invention to identifying the relay node for an access. The present embodiment is also a schematic diagram of an access system for a relay node in details. For details thereof, reference can be made to the descriptions of the method according to the third embodiment and the internal structures of the devices. The present embodiment subdivides the MME into the interface module 6 and the checking module 7 similar to Fig. 7, a repeated of which will be omitted here, and the processing module 8 of the MME according to the present embodiment further includes:

a relay indication adding sub-module configured to add relay node indication information indicating the relay node and indication information on the type of the relay node to an initial user equipment context setup request message or an initial context setup request message for the relay node when the result of the checking presents that the initiating node is a relay node; and

an indicating sub-module configured to transmit to the eNB the initial user equipment context setup request message or the initial context setup request message for the relay node processed by the relay indication adding sub-module.

As illustrated in Fig. 15, information is exchanged wirelessly between the respective devices. Advantageous effects are the same as in the embodiments of the method and respective devices, and a repeated description thereof will be omitted here.

Those ordinarily skilled in the art may appreciate that all or a part of the operations in the embodiments of the method may be performed with program instructing relevant hardware, which can be stored in a readable storage medium and which when being executed can perform the operations in the embodiments of the method, where the storage medium includes various mediums in a network device, e.g., an eNB, an MME, a relay node, etc., in which program codes can be stored, e.g., various medium in which program codes can be stored, including an ROM, an RAM, a magnetic disk, an optical disk, a network node, a scheduler, etc.

Lastly it shall be noted that the foregoing description is merely illustrative of the preferred embodiments of the invention but not intended to limit the invention and although the invention have been detailed in connection with the embodiments, those skilled in the art can make modifications to the technical solutions recited in the respective embodiments or equivalent substitutions of a part of technical features thereof. Any modifications, equivalent substitutions, adaptations, etc., made without departing from the scope of the invention shall come into the scope of the invention.

## Claims

1. A method for a network access of a relay node, applicable to a Long Term Evolution, LTE, network or an LTE-Advanced network and comprising:
transmitting by the relay node to a network side a network access message carrying a relay node indication distinguishing the relay node from a user equipment node; and
identifying at the network side the relay node by the relay node indication to perform the network access of the relay node.

2. The method of claim 1, wherein the transmitting by the relay node to the network side of the network access message comprises: transmitting by the relay node to an evolved Node B, eNB, an uplink connection setup request message comprising the relay node indication distinguishing the relay node from the user equipment node; and
the identifying at the network side of the relay node by the relay node indication comprises:
identifying by the eNB the relay node by the relay node indication and performing by the eNB the network access of the relay node.

3. The method of claim 2, wherein the uplink connection setup request message comprising the indication distinguishing the relay node from the user equipment node is:
an additional field distinguishing the relay node from the user equipment node comprised in the uplink connection setup request message; or
the indication distinguishing the relay node from the user equipment node comprised in a field of "Connection Establishment Cause" in the uplink connection setup request message.

4. The method of claim 3, wherein the indication distinguishing the relay node from the user equipment comprised in the field of Connection Establishment Cause is Relay Original.

5. The method of claim 4, wherein before the transmitting by the relay node of the uplink connection setup request message to the eNB, the method further comprises:
performing, by the relay node, uplink synchronization with the eNB; and
if the uplink synchronization succeeds, then transmitting by the eNB a random access response message comprising a temporary Cell Radio Network Temporary Identity, C-RNTI, to the relay node; otherwise, retreating by the relay node according to a preset retreat rule.

6. The method of claim 5, wherein the performing by the eNB of the network access of the relay node comprises:
converting by the eNB the temporary C-RNTI into a formal C-RNTI, feeding to the relay node for confirming the temporary C-RNTI of the relay node, and putting the formal C-RNTI in a group of relay nodes or using the formal C-RNTI as an indication of the status of the relay node.

7. The method of any one of claims 1 to 6, wherein the relay node is an IP forwarding based relay node.

8. The method of any one of claims 1 to 6, wherein the indication distinguishing the relay node from the user equipment node distinguishes one type of the relay node from another.

9. The method of claim 2, wherein the transmitting by the relay node to the network side of the network access message comprises: transmitting by the relay node to an evolved Node B, eNB, a non-access sub-layer message carrying the relay node indication distinguishing the relay node from the user equipment node; and
the identifying at the network side of the relay node by the relay node indication comprises:
checking by a mobility management entity at the network side from the relay node indication whether an initiating node of the non-access sub-layer message is a relay node;
indicating by the mobility management entity to the eNB forwarding the non-access sub-layer message about a result of the checking; and
performing, by the eNB, corresponding scheduling according to the result of the checking.

10. The method of claim 9, wherein the relay node indication comprises:
information on an International Mobile Subscriber Identity, IMSI, or a Globally Unique Temporary Identity, GUTI, of a user equipment which indicates the relay node, or information on a global cell ID of an eNB which indicates the relay node, or information on a special relay ID.

11. The method of claim 9, wherein the indicating by the mobility management entity to the eNB forwarding the non-access sub-layer message about the result of the checking comprises:
indicating by the mobility management entity to the eNB forwarding the non-access sub-layer message about the result of the checking via a created initial user equipment context setup request message; or
indicating by the mobility management entity to the eNB forwarding the non-access sub-layer message about the result of the checking via a created initial context setup request message for the relay node.

12. The method of claim 11, wherein the initial user equipment context setup request message or the initial context setup request message for the relay node comprises:
relay indication information distinguishing the relay node from a general user equipment; and
indication information indicating a type of the relay node.

13. The method of claim 12, wherein the relay indication information is the relay node indication when the result of the checking presents that the initiating node is a relay node.

14. A method for a network access of an initiating node, applicable to a Long Term Evolution, LTE, network or an LTE-Advanced network and comprising:
transmitting by the initiating node to a network side a network access message carrying an indication indicating that the initiating node is a relay node or a user equipment node; and
identifying at the network side the initiating node by the indication to perform the network access of the initiating node.

15. A system for a network access of a relay node, applicable to a Long Term Evolution, LTE, network or an LTE-Advanced network and comprising the relay node and a network device, wherein:
the relay node is configured to transmit to a network side a network access message carrying a relay node indication distinguishing the relay node from a user equipment node; and
the network device is configured to identify the relay node by the relay node indication to perform the network access of the relay node.

16. The system of claim 15, wherein the network device is an evolved Node B, eNB;
the relay node is configured to transmit to the eNB an uplink connection setup request message including the relay node indication distinguishing the relay node from the user equipment node; and
the eNB is configured to identify the relay node by the relay node indication to perform the network access of the relay node.

17. The system of claim 15, wherein the network device comprises an evolved Node B, eNB, and a mobility management entity;
the relay node is configured to transmit to the eNB a non-access sub-layer message carrying the relay node indication distinguishing the relay node from the user equipment node;
the eNB is configured to forward the non-access sub-layer message to the mobility management entity and to perform the network access of the relay node according to a result of checking by the mobility management entity; and
the mobility management entity at the network side is configured to check from the relay node indication in the non-access sub-layer message forwarded from the eNB whether the initiating node of the non-access sub-layer message is a relay node and to indicate to the eNB about the result of the checking.

18. A relay node, applicable to a Long Term Evolution, LTE, network or an LTE-Advanced network and comprising:
a configuring module configured to configure an indication distinguishing the relay node from a user equipment node in an uplink connection setup request message; and
a transmission module configured to transmit the uplink connection setup request message.

19. The relay node of claim 18, wherein the indication distinguishing the relay node from the user equipment node configured by the configuring module is:
an additional filed distinguishing the relay node from the user equipment node; or
an indication distinguishing the relay node from the user equipment node in a field of "Connection Establishment Cause".

20. An evolved Node B, eNB, for a network access of a relay node, applicable to a Long Term Evolution, LTE, network or an LTE-Advanced network and comprising:
a reception module configured to receive an uplink connection setup request message transmitted from the relay node;
a processing module configured to put a Cell Radio Network Temporary Identity, C-RNTI, of the relay node in a group of relay nodes or use the C-RNTI as an indication of the status of the relay node according to an indication distinguishing the relay node from a user equipment node in the uplink connection setup request message; and
an access module configured to perform the network access of the relay node.

21. A relay node, comprising:
a random access module configured to set up a random access process with a network side; and
an indication module configured to add a specific relay node indication after the random access module sets up a connection with the network side.

22. The relay node of claim 21, wherein the specific relay node indication comprises:
information on an International Mobile Subscriber Identity, IMSI, or a Globally Unique Temporary Identity, GUTI, of a user equipment which indicates the relay node, or information on a global cell ID of an eNB which indicates the relay node, or information on a special relay ID.

23. An evolved Node B, eNB, for a network access of a relay node, comprising:
an interface module configured to forward a non-access sub-layer message of a user side to a mobility management entity at a network side and to receive a corresponding feedback message;
an identifying module configured to identify from the feedback message of the mobility management entity whether an initiating node of the non-access sub-layer message is a relay node; and
a processing module configured to perform a corresponding scheduling policy according to a result of the identifying module.

24. The eNB of claim 23, wherein:
the feedback message is a created initial user equipment context setup request message or an initial context setup request message created by the mobility management entity for the relay node; and
the feedback message comprises relay indication information distinguishing the relay node from a general user equipment and indication information indicating a type of the relay node.

25. A mobility management entity, comprising:
an interface module configured to receive an initial user equipment message transmitted from an evolved Node B, eNB;
a checking module configured to check from a non-access sub-layer message in the initial user equipment message whether an initiating node of the non-access sub-layer message is a relay node as well as a type of the relay node; and
a processing module configured to indicate to the eNB about a result of the checking by the checking module via the interface module.

26. The mobility management entity of claim 25, wherein the processing module comprises:
a relay indication adding sub-module configured to add relay node indication information and indication information on the type of the relay node to an initial user equipment context setup request message or an initial context setup request message for the relay node when the result of the checking presents that the initiating node is a relay node; and
an indicating sub-module configured to transmit to the eNB the initial user equipment context setup request message or the initial context setup request message for the relay node processed by the relay indication adding sub-module.
